(19) Europäisches Patentamt
European Patent Office
Office européen des brevets

(11) **EP 3 860 159 B1**

(12) **EUROPEAN PATENT SPECIFICATION**

(45) Date of publication and mention
of the grant of the patent:
**23.07.2025 Bulletin 2025/30**

(21) Application number: **18941203.4**

(22) Date of filing: **26.11.2018**

(51) International Patent Classification (IPC):
*H04W 4/02* (2018.01)      *H04W 64/00* (2009.01)
*G01S 5/02* (2010.01)      *G01S 5/12* (2006.01)
*G01S 5/14* (2006.01)      *G01S 19/46* (2010.01)
*G01S 19/39* (2010.01)      *G01S 1/00* (2006.01)

(52) Cooperative Patent Classification (CPC):
**G01S 19/46; G01S 5/0244; G01S 5/0257;
G01S 5/12; G01S 5/145; G01S 19/396;
H04W 64/006**

(86) International application number:
**PCT/CN2018/117379**

(87) International publication number:
**WO 2020/107141 (04.06.2020 Gazette 2020/23)**

(54) **POSITIONING METHOD AND DEVICE**

POSITIONIERUNGSVERFAHREN UND -VORRICHTUNG

PROCÉDÉ ET DISPOSITIF DE POSITIONNEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.08.2021 Bulletin 2021/31**

(73) Proprietor: **Huawei Technologies Co., Ltd.
Shenzhen Guangdong 518129 (CN)**

(72) Inventors:
• **YANG, Rui
Shenzhen, Guangdong 518129 (CN)**

• **JIN, Hui
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(56) References cited:
EP-A1- 2 894 615        CN-A- 103 596 263
CN-A- 103 857 034        CN-A- 104 053 231
CN-B- 103 596 263        US-A1- 2012 295 641
US-A1- 2012 295 641

**Description**

**TECHNICAL FIELD**

Embodiments of this application relate to the field of terminal technologies, and in particular, to a positioning method and apparatus.

**BACKGROUND**

Currently, a location-based service application has become a trend of application service development, and a positioning function has become a standard configuration of all mobile devices. Currently, two types of method for positioning a mobile device are global positioning system (global positioning system, GPS for short) positioning and network positioning.

Currently, a method for determining a location of a mobile device is directly determining a location obtained through current positioning as a location of the mobile device. However, due to changes in satellite orbit and climate factors, sometimes there may be a relatively large difference between a location of the mobile device obtained through positioning by a GPS and an actual location of the mobile device. In addition, due to a change in network signal quality, sometimes there may be a relatively large difference between a location of the mobile device obtained through positioning by a network and an actual location of the mobile device. Consequently, there is a problem that the determined location is not accurate when the location obtained through current positioning is directly determined as the location of the mobile device, thereby affecting use of the location-based service application by a user.

Therefore, how to improve accuracy of the determined location of the mobile device is a technical problem that urgently needs to be resolved.

EP 2 894 615 A1 describes an information processing device that receives and processes posting information, as well as position information, from a mobile terminal. The position information includes first position information, which indicates a first position of the mobile terminal when a user enters an information posting intention into the mobile terminal, and second position information which indicates a second position of the mobile terminal when the user enters an information posting instruction into the mobile terminal. The information processing device determines position information to be associated with the posting information, based on at least one of a difference between the first position and the second position and a difference between a first point-in-time at which the mobile terminal is positioned at the first position and a second point-in-time at which the mobile terminal is positioned at the second position.

**SUMMARY**

This application provides a positioning method and apparatus, to improve accuracy of a determined location of a mobile device.

According to a first aspect, this application provides a positioning method, applied to a terminal, where the method includes:

positioning the terminal to obtain first location information, where the first location information includes a first location obtained through the positioning; and
if the first location is different from a second location obtained through previous positioning, determining a current location of the terminal based on the first location information and second location information, where the second location information is corresponding location information when the terminal obtains a third location through positioning, and the third location is a location that is of the terminal and that is determined before the terminal obtains the first location.

In this solution, location information obtained through current positioning and location information of the terminal determined before the current positioning are comprehensively considered, to determine whether a location obtained through the current positioning is relatively accurate or a location of the terminal determined before the current positioning is relatively accurate, instead of directly using the location obtained through the current positioning as the location of the terminal, thereby improving accuracy of the determined location of the terminal.

In a possible design, if the first location is different from the second location obtained through previous positioning and the terminal cannot obtain the third location, the terminal determines the first location as the current location of the terminal.

When the terminal cannot obtain the location of the terminal determined before the current positioning, the terminal determines a location obtained through the current positioning as the current location of the terminal. Because a time of the location obtained through the current positioning is relatively recent, accuracy of the determined location of the terminal is ensured to some extent.

According to the first aspect, the first location information further includes a first time of obtaining the first location through positioning and first precision of the first location. The second location information further includes a second time of obtaining the third location through positioning and second precision of the third location. The determining a current location of the terminal based on the first location information and second location information includes:
determining the current location of the terminal from the first location and the third location based on the first time, the second time, the first precision, and the second precision.

In this manner, a time of obtaining the first location through positioning and a time of obtaining the third location through positioning, and precision of the first location and precision of the third location are comprehensively considered to determine whether the first location is relatively accurate or the third location (a location of the terminal determined before the first location is obtained through positioning) is relatively accurate, thereby improving accuracy of the determined location of the terminal.

In an implementation, the first location information further includes a first manner of obtaining the first location through positioning. The second location information further includes a second manner of obtaining the third location through positioning. The determining the current location of the terminal from the first location and the third location based on the first time, the second time, the first precision, and the second precision includes:
determining the current location of the terminal from the first location and the third location based on the first time, the second time, the first precision, the second precision, the first manner, and the second manner.

In this manner, a time of obtaining the first location through positioning and a time of obtaining the third location through positioning, and precision of the first location and precision of the third location are comprehensively considered to determine the location of the terminal. In addition, a manner of obtaining the first location through positioning and a manner of obtaining the third location through positioning are also considered, further improving accuracy of the determined location of the terminal.

Further, the terminal stores a first correspondence and a second correspondence. The first correspondence includes a plurality of preset time difference ranges and a time score corresponding to each preset time difference range. The second correspondence includes a plurality of preset precision difference ranges and a precision score corresponding to each preset precision difference range.

According to the first aspect, the determining the current location of the terminal from the first location and the third location based on the first time, the second time, the first precision, and the second precision includes:

    obtaining a time difference between the first time and the second time;
    determining a target time score based on the first correspondence and the time difference;
    obtaining a precision difference between the first precision and the second precision;
    determining a target precision score based on the second correspondence and the precision difference;
    determining a decision score based on the target time score and the target precision score; and
    determining the current location of the terminal from the first location and the third location based on the decision score and a preset threshold.

The determining the target time score based on the first correspondence and the time difference includes:

    determining a target preset time difference range within which the time difference falls; and
    determining a time score corresponding to the target preset time difference range in the first correspondence as the target time score.

The determining the target precision score based on the second correspondence and the precision difference includes:

    determining a target preset precision difference range within which the precision difference falls; and
    determining a precision score corresponding to the target preset precision difference range in the second correspondence as the target precision score.

The determining a decision score based on the time score and the precision score includes:

    obtaining a first product of the target time score and a time weight;
    obtaining a second product of the target precision score and a precision weight; and
    obtaining the decision score based on the first product and the second product.

The determining the current location of the terminal from the first location and the third location based on the decision score and a preset threshold includes:

if the decision score is greater than or equal to the preset threshold, determining the first location as the current location of the terminal; or

if the decision score is less than the preset threshold, determining the third location as the current location of the terminal.

In the above-mentioned implementation, the determining the current location of the terminal from the first location and the third location based on the first time, the second time, the first precision, the second precision, the first manner, and the second manner includes:

obtaining a time difference between the first time and the second time;
determining a target time score based on the first correspondence and the time difference;
obtaining a precision difference between the first precision and the second precision;
determining a target precision score based on the second correspondence and the precision difference;
determining a decision score based on the target time score and the target precision score; and
determining the current location of the terminal from the first location and the third location based on the decision score, a preset threshold, the first manner, and the second manner.

The determining the current location of the terminal from the first location and the third location based on the decision score, a preset threshold, the first manner, and the second manner includes:

if the decision score is greater than a first preset threshold, determining the first location as the current location of the terminal;

if the decision score is less than a second preset threshold, determining the third location as the current location of the terminal;

if the decision score is greater than or equal to the second preset threshold and less than or equal to the first preset threshold, and the first manner is the same as the second manner, determining the first location as the current location of the terminal; or

if the decision score is greater than or equal to the second preset threshold and less than or equal to the first preset threshold, and the first manner is different from the second manner, determining the third location as the current location of the terminal.

According to a second aspect, an embodiment of this application provides a positioning apparatus, including:

a positioning module, configured to position an apparatus to obtain first location information, where the first location information includes a first location obtained through the positioning; and
a determining module, configured to: if the first location is different from a second location obtained through previous positioning, determine a current location of the apparatus based on the first location information and second location information, where the second location information is corresponding location information when the apparatus obtains a third location through positioning, and the third location is a location that is of the apparatus and that is determined before the apparatus obtains the first location.

In a possible design, the determining module is further configured to determine the first location as the current location of the apparatus if the first location is different from the second location obtained through previous positioning and the apparatus cannot obtain the third location.
According to the second aspect, the first location information further includes a first time of obtaining the first location through positioning and first precision of the first location, and the second location information further includes a second time of obtaining the third location through positioning and second precision of the third location.
The determining module is specifically configured to determine the current location of the apparatus from the first location and the third location based on the first time, the second time, the first precision, and the second precision.
In a possible design, the first location information further includes a first manner of obtaining the first location through positioning, and the second location information further includes a second manner of obtaining the third location through positioning.
The determining module is specifically configured to determine the current location of the apparatus from the first location and the third location based on the first time, the second time, the first precision, the second precision, the first manner, and the second manner.
According to the second aspect, the apparatus stores a first correspondence and a second correspondence. The first correspondence includes a plurality of preset time difference ranges and a time score corresponding to each preset time difference range. The second correspondence includes a plurality of preset precision difference ranges and a precision score corresponding to each preset precision difference range. The determining module is specifically configured to:

> obtain a time difference between the first time and the second time;
> determine a target time score based on the first correspondence and the time difference;
> obtain a precision difference between the first precision and the second precision;
> determine a target precision score based on the second correspondence and the precision difference;
> determine a decision score based on the target time score and the target precision score; and
> determine the current location of the apparatus from the first location and the third location based on the decision score and a preset threshold.

In a possible design, the determining module is specifically configured to:

> determine a target preset time difference range within which the time difference falls; and
> determine a time score corresponding to the target preset time difference range in the first correspondence as the target time score.

In a possible design, the determining module is specifically configured to:

> determine a target preset precision difference range within which the precision difference falls; and
> determine a precision score corresponding to the target preset precision difference range in the second correspondence as the target precision score.

In a possible design, the determining module is specifically configured to:

> obtain a first product of the target time score and a time weight;
> obtain a second product of the target precision score and a precision weight; and
> obtain the decision score based on the first product and the second product.

In a possible design, the determining module is specifically configured to:

> if the decision score is greater than or equal to the preset threshold, determine the first location as the current location of the terminal; or
> if the decision score is less than the preset threshold, determine the third location as the current location of the terminal.

In a possible design, the apparatus stores a first correspondence and a second correspondence. The first correspondence includes a plurality of preset time difference ranges and a time score corresponding to each preset time difference range. The second correspondence includes a plurality of preset precision difference ranges and a precision score corresponding to each preset precision difference range. The determining module is specifically configured to:

> obtain a time difference between the first time and the second time;
> determine a target time score based on the first correspondence and the time difference;
> obtain a precision difference between the first precision and the second precision;
> determine a target precision score based on the second correspondence and the precision difference;
> determine a decision score based on the target time score and the target precision score; and
> determine the current location of the apparatus from the first location and the third location based on the decision score, a preset threshold, the first manner, and the second manner.

In a possible design, the determining module is specifically configured to:

> if the decision score is greater than a first preset threshold, determine the first location as the current location of the terminal;
> if the decision score is less than a second preset threshold, determine the third location as the current location of the terminal;
> if the decision score is greater than or equal to the second preset threshold and less than or equal to the first preset threshold, and the first manner is the same as the second manner, determine the first location as the current location of the terminal; or

if the decision score is greater than or equal to the second preset threshold and less than or equal to the first preset threshold, and the first manner is different from the second manner, determine the third location as the current location of the terminal.

According to a third aspect, this embodiment provides a terminal, including a processor.

The processor is configured to: be coupled to a memory, and read and execute instructions in the memory, to implement the method according to any one of the first aspect or the possible designs of the first aspect.

In a possible design, the memory is further included.

According to a fourth aspect, this application provides a computer storage medium, including instructions. When the instructions are run on a computer, the computer is enabled to perform the method according to any one of the first aspect or the possible designs of the first aspect.

In this application, location information obtained through current positioning and location information of the terminal determined before the current positioning are comprehensively considered, to determine whether a location obtained through the current positioning is relatively accurate or a location of the terminal determined before the current positioning is relatively accurate, instead of directly using the location obtained through the current positioning as the location of the terminal currently. This greatly reduces a case in which the location obtained through the current positioning is still determined as the location of the terminal when there is a relatively large location error, and improves accuracy of the determined location of the terminal.

## BRIEF DESCRIPTION OF DRAWINGS

FIG. 1 is a principle diagram of a system in an OTDOA positioning manner;

FIG. 2 is a diagram of an application scenario according to an embodiment of this application;

FIG. 3 is a flowchart 1 of a method for determining a location of a terminal according to an embodiment of this application;

FIG. 4 is a flowchart 2 of a method for determining a location of a terminal according to an embodiment of this application;

FIG. 5 is a flowchart 3 of a method for determining a location of a terminal according to an embodiment of this application;

FIG. 6 is a schematic structural diagram of a positioning apparatus according to an embodiment of this application; and

FIG. 7 is a schematic structural diagram of a terminal according to an embodiment of this application.

## DESCRIPTION OF EMBODIMENTS

In this application, "at least one" means one or more, and "a plurality of" means two or more. The term "and/or" describes an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of the items, including any combination of one item (piece) or a plurality of items (pieces). For example, at least one of a, b, and c may indicate: a, b, c, a-b, a-c, b-c, or a-b-c, where a, b, and c may be singular or plural. In this application, the terms "first", "second", and the like are used to distinguish between similar objects but do not necessarily indicate a specific order or sequence.

First, related descriptions are provided for technical terms in this application.

GPS positioning: A location of a GPS receiver is determined by using a plurality of satellites with known locations. The GPS receiver is located inside a terminal, to position a location of the terminal. The following uses four satellites as an example to describe a positioning principle of the GPS: obtaining distances d1, d2, d3, and d4 that are from the GPS receiver to the four satellites, and solving, based on locations P1, P2, P3, and P4 of the four satellites and d1, d2, d3, and d4, to obtain the location of the GPS receiver. The locations of the four satellites P1, P2, P3, and P4 are broadcast to the GPS receiver by the four satellites. A method for obtaining the distances d1, d2, d3, and d4 that are from the GPS receiver to the four satellites is as follows: The GPS satellite broadcasts the location of the GPS satellite. Therefore, when sending location information, the GPS receiver adds a timestamp when the data packet is sent. After receiving the data packet, the GPS receiver subtracts the timestamp from a current time (the current time is determined by the GPS receiver) to obtain a time during which the data packet is transmitted in the air. A transmission distance of the data packet in the air, that is, the distance from the satellite to the GPS receiver, is obtained by multiplying the time during which the data packet is transmitted in the air by a transmission speed.

Network positioning: In a network positioning method, Wi-Fi and cell information is mainly used to calculate location information of a terminal by using a triangulation positioning algorithm or a fingerprint positioning algorithm.

The following describes principles of two possible positioning manners corresponding to the triangulation positioning algorithm: one is an uplink time difference of arrival (uplink time difference of arrival, UTDOA for short) positioning manner, and the other is an observed time difference of arrival (observed time difference of arrival, OTDOA for short) positioning manner.

In the UTDOA positioning manner, an uplink positioning signal (for example, a sounding reference signal (sounding reference signal, SRS for short)) is sent by using user equipment (user equipment, UE for short), and time of arrival of the uplink signal is estimated on an evolved node (evolved node, eNB for short) side, to obtain a distance from the eNB to the UE. Therefore, distances from a plurality of eNBs to the UE are obtained, and relative coordinates of the UE relative to the eNB are calculated by using an algorithm such as a trilateration. The network may obtain an absolute location of the UE based on an actual location of the eNB.

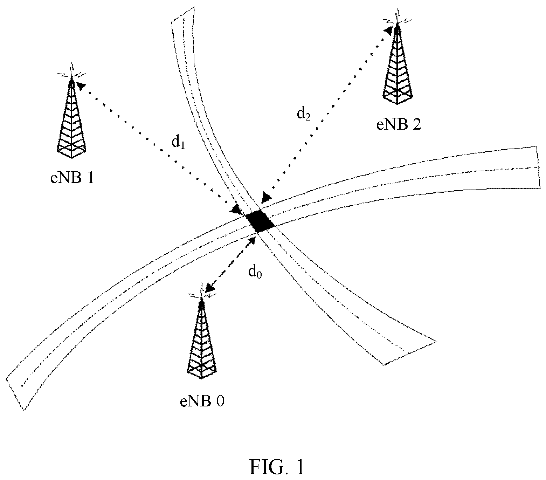

FIG. 1 is a principle diagram of a system in an OTDOA positioning manner. A principle of the OTDOA positioning manner is as follows: When three or more eNBs are deployed in a system, a location of UE can be determined based on a time difference of arrival of downlink transmission signals from different eNBs. The downlink transmission signal may be a positioning reference signal, or may be a synchronization signal. As can be seen from a definition of a hyperbola, a hyperbola is formed by points whose difference of distances to two fixed points is a constant value. As shown in FIG. 1, the system includes an eNB 0, an eNB 1, and an eNB 2. It is assumed that a black entity part in FIG. 1 indicates the location of the UE, a difference between a distance from the UE to the eNB 0 and a distance from the UE to the eNB 1 is d1 - d0, forming a hyperbola; and a difference between the distance from the UE to the eNB 1 and a distance from the UE to the eNB 2 is d2 - d1, forming another hyperbola. An intersection point of the two hyperbola is the location of the UE. When more eNBs exist in the system, the determined location of the UE is more precise. In an LTE, OTDOA positioning is a network-assisted UE positioning technology. On a network side, after an enhanced serving mobile location center (enhanced serving mobile location centre, e-SMLC for short) specifies sending and receiving configuration of a positioning reference signal (positioning reference signal, PRS for short) for the eNB and a mobile station, the eNB sends the PRS in a downlink. After receiving PRSs from a plurality of eNBs, the mobile station identifies a first -arrival path location of each PRS to obtain a time difference of arrival of PRS between different eNBs, and reports the time difference of arrival of PRS between different eNBs to the e-SMLC. The e-SMLC can obtain, through mapping, a distance difference between the mobile station and different eNBs based on the received time difference of arrival of PRS. Through the hyperbola model mathematical calculation, the e-SMLC can obtain an accurate location of the mobile station.

It may be understood that the network positioning is not limited to the foregoing two methods.

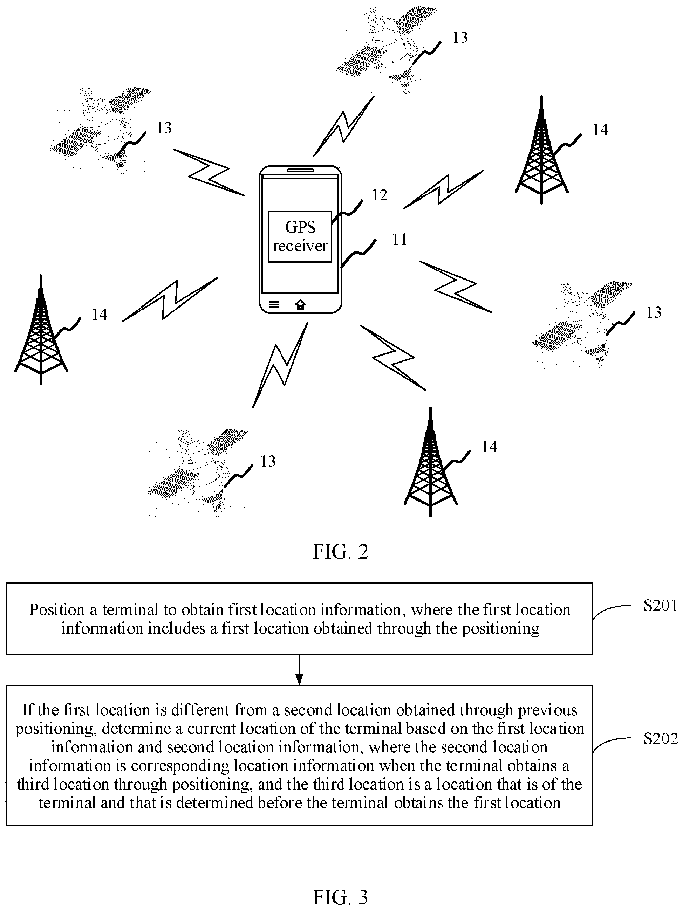

FIG. 2 is a diagram of an application scenario according to an embodiment of this application.

Referring to FIG. 2, a terminal 11 has a GPS receiver 12, and the GPS receiver 12 interacts with a satellite 13, so that a location of the terminal can be obtained through positioning. The terminal 11 interacts with an eNB 14, and can also locate the location of the terminal.

The following uses a specific embodiment to describe a method for determining a location of a terminal.

FIG. 3 is a flowchart 1 of a method for determining a location of a terminal according to an embodiment of this application. This embodiment may be executed by the terminal in FIG. 2. Referring to FIG. 3, the method in this embodiment includes the following steps.

S201: Position the terminal to obtain first location information, where the first location information includes a first location obtained through the positioning.

Specifically, positioning functions of the terminal in various manners in this embodiment are all enabled. A positioning function of one manner corresponds to one positioning manner. For example, if a positioning function of one manner of the terminal is a GPS positioning function, and a positioning function of the other manner is a network positioning function, both the GPS positioning function and the network positioning function of the terminal are enabled. A positioning manner corresponding to the GPS positioning function is GPS positioning, and a positioning manner corresponding to the network positioning function is network positioning.

It may be understood that, when the positioning functions of the terminal in the various manners are all enabled, the terminal performs positioning by using the positioning functions in the various manners.

In step S201, a current terminal positions the current terminal to obtain the first location information. The first location information includes the first location that is of the terminal and that is obtained through current positioning. Further, the first location information further includes a first time of obtaining the first location through positioning and/or first precision of the first location. The first location may include a longitude value and a latitude value, a unit of the first precision may be m, and the first time of obtaining the first location through positioning may be a timestamp included in the first location information. A method for obtaining location precision is a method in the prior art. Details are not described herein.

It may be understood that a current manner of positioning the terminal by the terminal may be any one of various positioning manners of the terminal. If the various positioning manners of the terminal include the GPS positioning and the network positioning, a manner in which the terminal positions the terminal at a current moment to obtain the first location information may be the GPS positioning, or may be the network positioning.

Positioning the terminal to obtain the first location information may also be referred to as monitoring a location of the terminal to obtain the first location information.

S202: If the first location is different from a second location obtained through previous positioning, determine a current location of the terminal based on the first location information and second location information, where the second location information is corresponding location information when the terminal obtains a third location through positioning, and the third location is a location that is of the terminal and that is determined before the terminal obtains the first location.

Specifically, if the terminal determines that the first location is the same as the second location obtained through previous positioning, it indicates that the location of the terminal does not change, and a process of determining the location of the terminal is not started.

If the terminal determines that the first location is different from the second location obtained through previous positioning, it indicates that the location of the terminal may have changed. The previous positioning is the latest positioning before the current positioning, that is, the previous positioning and the current positioning are two consecutive times of positioning. A previous positioning manner may be the same as or different from a current positioning manner.

If the terminal has N positioning manners, in an initialization phase, obtaining, by the terminal, N pieces of initial location information corresponding to the latest positioning in the N positioning manners, where the initial location information is in a one-to-one correspondence with the positioning manners; obtaining each timestamp included in each piece of initial location information, where the timestamp included in the initial location information includes a time of the latest positioning in a corresponding positioning manner; and determining a positioning manner corresponding to a latest timestamp included in each timestamp as a target positioning manner, where a location included in initial location information corresponding to a latest positioning in the target positioning manner is determined as a location that is of the terminal and that is determined in the initialization phase.

For example, the various positioning manners of the terminal include the GPS positioning and the network positioning. In the initialization phase, the terminal obtains first initial location information corresponding to latest GPS positioning and second initial location information corresponding to the network positioning, and obtains a first timestamp included in the first initial location information and a second timestamp included in the second initial location information. If a time included in the first timestamp minus a time included in the second timestamp is less than 0, it is determined that the network positioning is the target positioning manner, and that a location included in the second initial location information is the location that is of the terminal and that is determined in the initialization phase. If a time included in the first timestamp minus a time included in the second timestamp is greater than 0, it is determined that the GPS positioning is the target positioning manner, and that a location included in the first initial location information is the location that is of the terminal and that is determined in the initialization phase.

After a location is subsequently obtained through each positioning, the terminal re-determines a location of the terminal, replaces a previously determined location of the terminal with a newly determined location of the terminal, and stores the newly determined location of the terminal in the terminal. It may be understood that, because the second location obtained through the previous positioning is not necessarily accurate, the second location is not necessarily a location that is of the terminal and that is determined after the terminal obtains the second location and before the terminal obtains the first location. The location that is of the terminal and that is determined after the terminal obtains the second location and before the terminal obtains the first location is referred to as the third location in this embodiment. That is, in this embodiment, the second location may be the same as or different from the third location.

If initialization fails in the initialization phase, the terminal or a cloud does not store the location that is of the terminal and that is determined in the initialization phase. Therefore, after the first location is obtained, it needs to be determined whether the third location is stored in the terminal or the cloud.

If the third location is stored on the terminal or the cloud, it indicates that the terminal can obtain the third location, and the terminal determines the current location of the terminal based on the first location information and the second location information. The second location information is location information corresponding to the third location obtained through positioning by the terminal, and the second location information includes the third location. The second location information further includes a second time of obtaining the third location through positioning and/or second precision of the third location. The third location may include a longitude value and a latitude value, a unit of the second precision may be m, and the second time of obtaining the third location through positioning may be a time in a timestamp included in the second location information.

In one manner, the determining a current location of the terminal based on the first location information and second location information includes:

determining the current location of the terminal from the first location and the third location based on the first time, the second time, the first precision, and the second precision.

In this manner, the time of obtaining the first location through positioning and the time of obtaining the third location through positioning, and the precision of the first location and the precision of the third location are comprehensively considered to determine whether the first location is relatively accurate or the third location (a location of the terminal determined before the first location is obtained through positioning) is relatively accurate, thereby improving accuracy of the determined location of the terminal.

It may be understood that, if the first location is relatively accurate, the first location is determined as the current location of the terminal, the third location is replaced with the determined current location of the terminal, and the determined current location of the terminal is stored on the terminal or the cloud. If the third location is relatively accurate, the third location is determined as the current location of the terminal, that is, the location of the terminal is not updated. This also indicates that there is a relatively large difference between the first location obtained through positioning at the current moment and an actual location of the terminal, and the first location is unavailable.

In another manner, if the first location information further includes a first manner of obtaining the first location through positioning, and the second location information further includes a second manner of obtaining the third location through positioning, the determining the current location of the terminal from the first location and the third location based on the first time, the second time, the first precision, and the second precision includes:
determining the current location of the terminal from the first location and the third location based on the first time, the second time, the first precision, the second precision, the first manner, and the second manner.

In this manner, a time of obtaining the first location through positioning and a time of obtaining the third location through positioning, and precision of the first location and precision of the third location are comprehensively considered to determine the location of the terminal. In addition, a manner of obtaining the first location through positioning and a manner of obtaining the third location through positioning are also considered, further improving accuracy of the determined location of the terminal.

It may be understood that, if the third location is not stored on the terminal or the cloud, it indicates that the terminal cannot obtain the third location, and the terminal determines the first location as the current location of the terminal.

If the initialization fails, the location of the terminal determined in the initialization phase is not stored on the terminal or the cloud. If the terminal cannot obtain the third location, it indicates that the current positioning is positioning performed for the first time according to the positioning method in this embodiment after the initialization. Because the location of the terminal determined in the initialization phase is not stored on the terminal or the cloud, the first location is directly determined as the current location of the terminal.

Further, after the current location of the terminal is determined in step S202, the determined current location of the terminal may be displayed to a user.

In this embodiment, location information obtained through current positioning and location information of the terminal determined before the current positioning are comprehensively considered, to determine whether a location obtained through the current positioning is relatively accurate or a location of the terminal determined before the current positioning is relatively accurate, instead of directly using the location obtained through the current positioning as the location of the terminal. This greatly reduces a case in which the location obtained through the current positioning is still determined as the location of the terminal when there is a relatively large location error, and improves accuracy of the determined location of the terminal.

The positioning method in this application may be used in various applications that require positioning. Because positioning of the terminal in the method in this application is relatively accurate, the terminal can accurately predict a distance between a current location of the terminal and a weak signal or a black cell, or can accurately predict a time at which the terminal arrives at the weak signal or the black cell, and send the determined location of the terminal and predicted data to a corresponding third-party application. In this way, work of the third-party application can be done in advance before entering a weak signal area, to enable the terminal to normally provide a service. For example, the third-party application can cache audio and video data in advance before entering a weak signal area, to prevent audio and video freezing when the user watches videos on the terminal.

The following uses a specific embodiment to describe a process of "determining the current location of the terminal based on the first location information and the second location information".

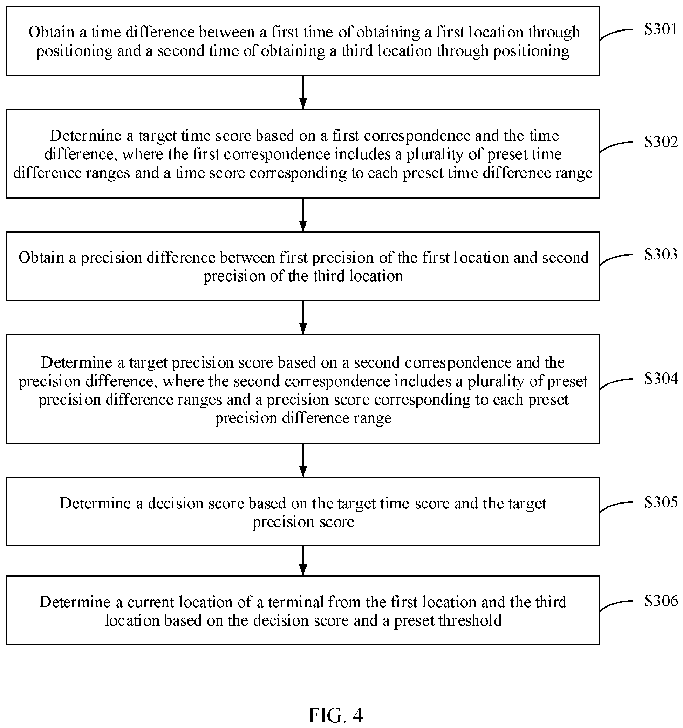

An implementation of "determining the current location of the terminal based on the first location information and the second location information" is first described. FIG. 4 is a flowchart 2 of a method for determining a location of a terminal according to an embodiment of this application. Referring to FIG. 4, the method in this embodiment includes:

Step S301: Obtain a time difference between a first time of obtaining a first location through positioning and a second time of obtaining a third location through positioning.

Specifically, the second time of obtaining the third location through positioning is subtracted from the first time of obtaining the first location through positioning, to obtain the time difference.

Step S302: Determine a target time score based on a first correspondence and the time difference, where the first correspondence includes a plurality of preset time difference ranges and a time score corresponding to each preset time difference range.

Specifically, the determining a target time score based on a first correspondence and the time difference includes:

determining a target preset time difference range within which the time difference falls; and
determining a time score corresponding to the target preset time difference range in the first correspondence as the target time score.

The first correspondence may include content shown in Table 1 or Table 2:

**Table 1**

| Preset time difference range | Time score ST |
|---|---|
| $(-\infty, t_0]$ | 0.05 |
| $(t_0, t_1]$ | 0.2 |
| $(t_1, t_2]$ | 0.3 |
| $(t2, +\infty]$ | 0.55 |

**Table 2**

| Preset time difference range | Time score ST | Time weight |
|---|---|---|
| $(-\infty, t_0]$ | 0.05 | 0.6 |
| $(t_0, t_1]$ | 0.2 | 0.6 |
| $(t_1, t_2]$ | 0.3 | 0.6 |
| $(t2, +\infty]$ | 0.55 | 0.6 |

$t_0$ may be any one of -5s to -1s, $t_1$ may be 0s, and $t_2$ may be any one of 1s to 5s.

It may be understood that the first correspondence is not limited to the content in Table 1 or Table 2, and Table 1 or Table 2 is merely a form of the first correspondence. For example, a quantity of the preset time difference ranges may be less than 4, or greater than 4, numerical values of $t_0$, $t_1$, and $t_2$ may change, time scores may change, and time weights may also change. An overall trend that needs to be followed is as follows: A larger time difference included in the preset time difference range indicates a higher time score. This is because a larger time difference included in the preset time difference range indicates a newer first location, and it is more appropriate to determine the first location as the location of the terminal.

For example, if the time difference obtained by subtracting the second time of obtaining the third location through positioning from the first time of obtaining the first location through positioning is 2s, $t_0$ is -3s, $t_1$ is 0s, and $t_2$ may be 3s, the plurality of preset time difference ranges are (-∞, -3s], (3s, 0s], (0s, 3s], and (3s, +∞], 2s is within the preset time difference range (0s, 3s], the preset time difference range (0s, 3s] is the target preset time difference range, and a time score 0.3 corresponding to the preset time difference range (0s, 3s] is the target time score.

Step S303: Obtain a precision difference between first precision of the first location and second precision of the third location.

Specifically, the second precision of the third location is subtracted from the first precision of the first location, to obtain the precision difference.

Step S304: Determine a target precision score based on a second correspondence and the precision difference, where the second correspondence includes a plurality of preset precision difference ranges and a precision score corresponding to each preset precision difference range.

Specifically, the determining a target precision score based on the second correspondence and the precision difference includes:

determining a target preset precision difference range within which the precision difference falls; and
determining a precision score corresponding to the target preset precision difference range in the second correspondence as the target precision score.

The second correspondence may include content shown in Table 3 or Table 4:

**Table 3**

| Preset time difference range | Time score ST |
|---|---|
| $(-\infty, t_0]$ | 0.1 |

(continued)

| Preset time difference range | Time score ST |
|---|---|
| $(t_0, t_1]$ | 0.35 |
| $(t_1, t_2]$ | 0.55 |

**Table 4**

| Preset precision difference range | Time score ST | Precision weight |
|---|---|---|
| $(a_0, +\infty]$ | 0.1 | 0.4 |
| $(a_1, a_0]$ | 0.35 | 0.4 |
| $(-\infty, a_1]$ | 0.55 | 0.4 |

$a_0$ may be 20 m, and $a_1$ may be 0 m.

It may be understood that the second correspondence is not limited to the content in Table 3 or Table 4, and Table 3 or Table 4 is merely a form of the second correspondence. For example, a quantity of the preset precision difference ranges may be less than 3, or greater than 3, numerical values of $a_0$ and $a_1$ may change, precision scores corresponding to the preset precision may change, and precision weights may also change. An overall trend that needs to be followed is as follows: A larger precision difference included in the preset precision difference range indicates a lower precision score. This is because a larger precision difference included in the preset precision difference range indicates lower precision of the first location, and it is less appropriate to determine the first location as the location of the terminal. It may be understood that a larger precision score indicates lower precision, and a smaller precision score indicates higher precision.

For example, if the precision difference obtained by subtracting the second precision of the third location from the first precision of the first location is -5 m, $a_0$ is any one of 20 m, and $a_1$ is 0 m, the plurality of preset precision difference ranges are (20 m, +∞], (0 m, 20 m], (-∞, 0 m], -5 m is within the preset precision difference range (-∞, 0 m], the preset precision difference range (-∞, 0 m] is the target preset precision difference range, and a precision score 0.55 corresponding to the preset precision difference range (-∞, 0 m] is the target precision score.

Step S305: Determine a decision score based on the target time score and the target precision score.

Specifically, the determining a decision score based on the target time score and the target precision score includes:

obtaining a first product of the target time score and a time weight;
obtaining a second product of the target precision score and a precision weight; and
obtaining the decision score based on the first product and the second product.

For example, the decision score S may be obtained by using the following formula:

$$S = SA \times \lambda + ST \times \alpha$$

SA may be the target time score, and ST may be the target precision score.

For example, if the target time score is 0.3, the time weight is 0.65, the target precision score is 0.55, and the precision weight is 0.35, the decision score is as follows: S = 0.3 × 0.65 + 0.55 × 0.35 = 0.3875.

Step S306: Determine the current location of the terminal from the first location and the third location based on the decision score and a preset threshold.

Specifically, the determining the current location of the terminal from the first location and the third location based on the decision score and a preset threshold includes:

if the decision score is greater than or equal to the preset threshold, determining the first location as the current location of the terminal; if the decision score is less than the preset threshold, determining the third location as the current location of the terminal.

The preset threshold may be 0.3.

If the decision score is greater than the preset threshold, it indicates that the decision score is relatively high. This may be caused because the first location is very recent, or may be caused because precision of the first location is very high, or may be caused because the first location is relatively recent and precision of the first location is relatively high. That is, it is appropriate to determine the first location as the current location of the terminal after comprehensively considering degrees of time recentness of the first location and the third location, and degrees of high precision of the first location and the third location.

If the decision score is less than the preset threshold, it indicates that the decision score is relatively low. This may be caused because the first location is very old in time, or may be caused because precision of the first location is very low, or may be caused because the first location is relatively old in time and precision of the first location is relatively low. That is, it is appropriate to determine the third location as the current location of the terminal after comprehensively considering degrees of time recentness of the first location and the third location, and degrees of high precision of the first location and the third location.

In this embodiment, the time and the precision of the first location obtained through current positioning and the time and the precision of the third location of the terminal determined before the first location is obtained through positioning are comprehensively considered, so as to determine whether the first location is relatively accurate or the third location is relatively accurate in terms of a time and precision, thereby improving accuracy of the determined location of the terminal.

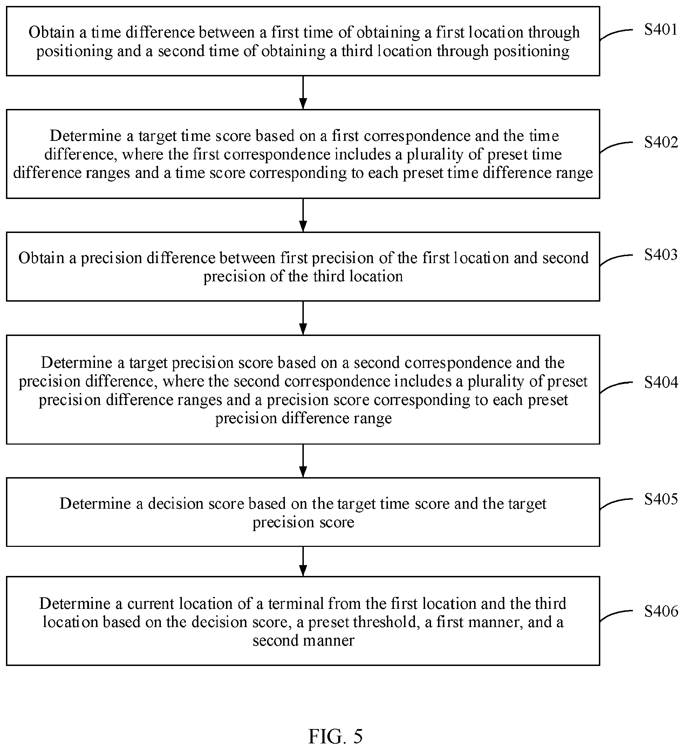

Next, another implementation of "determining the current location of the terminal based on the first location information and the second location information" is described. FIG. 5 is a flowchart 3 of a method for determining a location of a terminal according to an embodiment of this application. Referring to FIG. 5, the method in this embodiment includes:

Step S401: Obtain a time difference between a first time of obtaining a first location through positioning and a second time of obtaining a third location through positioning.

For details, refer to the description of step S301 in the embodiment shown in FIG. 4. Details are not described herein again.

Step S402: Determine a target time score based on a first correspondence and the time difference, where the first correspondence includes a plurality of preset time difference ranges and a time score corresponding to each preset time difference range.

For details, refer to the description of step S302 in the embodiment shown in FIG. 4. Details are not described herein again.

Step S403: Obtain a precision difference between first precision of the first location and second precision of the third location.

For details, refer to the description of step S303 in the embodiment shown in FIG. 4. Details are not described herein again.

Step S404: Determine a target precision score based on a second correspondence and the precision difference, where the second correspondence includes a plurality of preset precision difference ranges and a precision score corresponding to each preset precision difference range.

For details, refer to the description of step S304 in the embodiment shown in FIG. 4. Details are not described herein again.

Step S405: Determine a decision score based on the target time score and the target precision score.

For details, refer to the description of step S305 in the embodiment shown in FIG. 4. Details are not described herein again.

Step S406: Determine the current location of the terminal from the first location and the third location based on the decision score, a preset threshold, the first manner, and the second manner.

Specifically, the determining the current location of the terminal from the first location and the third location based on the decision score, a preset threshold, the first manner, and the second manner includes:

if the decision score is greater than a first preset threshold, determining the first location as the current location of the terminal;
if the decision score is less than a second preset threshold, determining the third location as the current location of the terminal;
if the decision score is greater than or equal to the second preset threshold and less than or equal to the first preset threshold, and the first manner is the same as the second manner, determining the first location as the current location of the terminal; or
if the decision score is greater than or equal to the second preset threshold and less than or equal to the first preset threshold, and the first manner is different from the second manner, determining the third location as the current location of the terminal.

The first preset threshold may be 0.35, and the second preset threshold may be 0.3.

If the decision score is greater than the first preset threshold, it indicates that the decision score is relatively high. This may be caused because the first location is very recent, or may be caused because precision of the first location is very high, or may be caused because the first location is relatively recent and precision of the first location is relatively high. That is, it is appropriate to determine the first location as the current location of the terminal after comprehensively considering degrees of time recentness of the first location and the third location, and degrees of high precision of the first location and the third location.

If the decision score is less than the second preset threshold, it indicates that the decision score is relatively low. This may be caused because the first location is very old in time, or may be caused because precision of the first location is very low, or may be caused because the first location is relatively old in time and precision of the first location is relatively low. That is, it is appropriate to determine the third location as the current location of the terminal after comprehensively considering degrees of time recentness of the first location and the third location, and degrees of high precision of the first location and the third location.

If the decision score is between the first preset threshold and the second preset threshold, a manner of obtaining the first location through positioning and a manner of obtaining the third location through positioning may be considered. Because a comparison of positioning in a same positioning manner at different moments is relatively reliable, if the manner of obtaining the first location through positioning is the same as the manner of obtaining the third location through positioning, it is determined that the first location is the current location of the terminal. If the manner of obtaining the first location through positioning is different from the manner of obtaining the third location through positioning, it is determined that the third location is the current location of the terminal.

In this embodiment, the time, the precision, and the positioning manner of the first location obtained through current positioning and the time, the precision, and the positioning manner of the third location of the terminal determined before the first location is obtained through positioning are comprehensively considered, so as to determine whether the first location obtained through the current positioning is relatively accurate or the third location determined last time is relatively accurate in terms of a time, precision, and a positioning manner, thereby further improving accuracy of the determined location of the terminal.

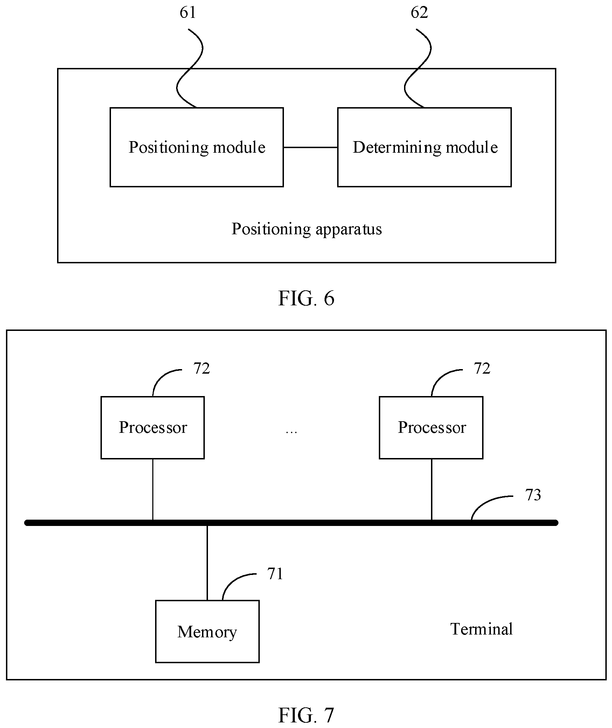

The positioning method provided in this application is described above in detail with reference to FIG. 2 to FIG. 5. A positioning apparatus provided in this application is described below with reference to FIG. 6.

FIG. 6 is a schematic structural diagram of a positioning apparatus according to an embodiment of this application. Referring to FIG. 6, the apparatus in this embodiment includes a positioning module 61 and a determining module 62.

The positioning module 61 is configured to position an apparatus to obtain first location information. The first location information includes a first location obtained through the positioning.

The determining module 62 is configured to: if the first location is different from a second location obtained through previous positioning, determine a current location of the apparatus based on the first location information and second location information. The second location information is corresponding location information when the apparatus obtains a third location through positioning. The third location is a location that is of the apparatus and that is determined before the apparatus obtains the first location.

Optionally, the determining module 62 is further configured to determine the first location as the current location of the apparatus if the first location is different from the second location obtained through the previous positioning and the apparatus cannot obtain the third location.

Optionally, the first location information further includes a first time of obtaining the first location through positioning and first precision of the first location, and the second location information further includes a second time of obtaining the third location through positioning and second precision of the third location.

The determining module 62 is specifically configured to determine the current location of the apparatus from the first location and the third location based on the first time, the second time, the first precision, and the second precision.

Optionally, the first location information further includes a first manner of obtaining the first location through positioning, and the second location information further includes a second manner of obtaining the third location through positioning.

The determining module 62 is specifically configured to determine the current location of the apparatus from the first location and the third location based on the first time, the second time, the first precision, the second precision, the first manner, and the second manner.

Optionally, the apparatus stores a first correspondence and a second correspondence. The first correspondence includes a plurality of preset time difference ranges and a time score corresponding to each preset time difference range. The second correspondence includes a plurality of preset precision difference ranges and a precision score corresponding to each preset precision difference range. The determining module 62 is specifically configured to:

obtain a time difference between the first time and the second time;
determine a target time score based on the first correspondence and the time difference;
obtain a precision difference between the first precision and the second precision;
determine a target precision score based on the second correspondence and the precision difference;
determine a decision score based on the target time score and the target precision score; and
determine the current location of the apparatus from the first location and the third location based on the decision score and a preset threshold.

Optionally, the determining module 62 is specifically configured to:

determine a target preset time difference range within which the time difference falls; and
determine a time score corresponding to the target preset time difference range in the first correspondence as the target time score.

Optionally, the determining module 62 is specifically configured to:

determine a target preset precision difference range within which the precision difference falls; and
determine a precision score corresponding to the target preset precision difference range in the second correspondence as the target precision score.

Optionally, the determining module 62 is specifically configured to:

obtain a first product of the target time score and a time weight;
obtain a second product of the target precision score and a precision weight; and
obtain the decision score based on the first product and the second product.

Optionally, the determining module 62 is specifically configured to:

if the decision score is greater than or equal to the preset threshold, determine the first location as the current location of the terminal; or
if the decision score is less than the preset threshold, determine the third location as the current location of the terminal.

Optionally, the apparatus stores a first correspondence and a second correspondence. The first correspondence includes a plurality of preset time difference ranges and a time score corresponding to each preset time difference range. The second correspondence includes a plurality of preset precision difference ranges and a precision score corresponding to each preset precision difference range. The determining module 62 is specifically configured to:

obtain a time difference between the first time and the second time;
determine a target time score based on the first correspondence and the time difference;
obtain a precision difference between the first precision and the second precision;
determine a target precision score based on the second correspondence and the precision difference;
determine a decision score based on the target time score and the target precision score; and
determine the current location of the apparatus from the first location and the third location based on the decision score, a preset threshold, the first manner, and the second manner.

Optionally, the determining module 62 is specifically configured to:

if the decision score is greater than a first preset threshold, determine the first location as the current location of the terminal;
if the decision score is less than a second preset threshold, determine the third location as the current location of the terminal;
if the decision score is greater than or equal to the second preset threshold and less than or equal to the first preset threshold, and the first manner is the same as the second manner, determine the first location as the current location of the terminal; or
if the decision score is greater than or equal to the second preset threshold and less than or equal to the first preset threshold, and the first manner is different from the second manner, determine the third location as the current location of the terminal.

The apparatus in this embodiment may be used to execute the technical solutions of the foregoing method embodiment. Implementation principles and technical effects thereof are similar. Details are not described herein again.
FIG. 7 is a schematic structural diagram of a terminal according to an embodiment of this application. Referring to FIG. 7, the terminal in this embodiment includes a processor 72, a memory 71, and a communications bus 73. The communications bus 73 is configured to connect the processor 71 and the memory 72, and the processor 71 is coupled to the memory 72.
The memory 71 is configured to store a computer program.

The processor 72 is configured to invoke the computer program stored in the memory, to implement the method in the foregoing method embodiment.

The computer program may be further stored in a memory outside the terminal.

It should be understood that in this embodiment of this application, the processor 72 may be a CPU, or the processor 72 may be another general purpose processor, a digital signal processor (DSP), an application-specific integrated circuit (ASIC), a field programmable gate array (FPGA) or another programmable logic device, a discrete gate or transistor logic device, a discrete hardware component, or the like. The general purpose processor may be a microprocessor, or any conventional processor, or the like.

The memory 71 may include a read-only memory and a random access memory, and provide instructions and data to the processor 72. The memory 71 may further include a nonvolatile random access memory. For example, the memory 71 may further store information of a device type.

The memory 71 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data date SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

In addition to a data bus, the bus 73 may further include a power bus, a control bus, a status signal bus, and the like. However, for clear description, various types of buses in the figure are marked as the bus 73.

An embodiment of this application provides a readable storage medium, including a program or instructions. When the program or the instructions are run on a computer, the method in the foregoing method embodiment is performed.

All or some of the foregoing embodiments may be implemented by using software, hardware, firmware, or any combination thereof. When software is used to implement the embodiments, the foregoing embodiments may be implemented completely or partially in a form of a computer program product. The computer program product includes one or more computer instructions. When the computer program instructions are loaded or executed on the computer, the procedure or functions according to this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive (solid state drive, SSD).

**Claims**

1. A positioning method, applied to a terminal (11), wherein the method comprises:

> positioning (S201) the terminal (11) to obtain first location information, wherein the first location information comprises a first location obtained through the positioning; and
> if the first location is different from a second location obtained through previous positioning, determining (S202) a current location of the terminal (11) based on the first location information and second location information, wherein the second location information is corresponding location information when the terminal obtains a third location through positioning, and the third location is a location that is of the terminal and that is determined before the terminal obtains the first location;
> **characterized in that**
> the first location information further comprises a first time of obtaining the first location through positioning and first precision of the first location, and the second location information further comprises a second time of obtaining the third location through positioning and second precision of the third location; and

the determining (S202) a current location of the terminal (11) based on the first location information and second location information comprises:

determining the current location of the terminal (11) from the first location and the third location based on the first time, the second time, the first precision, and the second precision;
wherein the terminal (11) stores a first correspondence and a second correspondence, the first correspondence comprises a plurality of preset time difference ranges and a time score corresponding to each preset time difference range, and the second correspondence comprises a plurality of preset precision difference ranges and a precision score corresponding to each preset precision difference range; and
the determining the current location of the terminal (11) from the first location and the third location based on the first time, the second time, the first precision, and the second precision comprises:

obtaining (S301) a time difference between the first time and the second time;
determining (S302) a target time score based on the first correspondence and the time difference;
obtaining (S303) a precision difference between the first precision and the second precision;
determining (S304) a target precision score based on the second correspondence and the precision difference;
determining (S305) a decision score based on the target time score and the target precision score; and
determining (S306) the current location of the terminal (11) from the first location and the third location based on the decision score and a preset threshold.

2. The method according to claim 1, wherein if the first location is different from the second location obtained through previous positioning and the terminal (11) cannot obtain the third location, the terminal determines the first location as the current location of the terminal.

3. The method according to any one of the preceding claims, wherein the determining (S302) the target time score based on the first correspondence and the time difference comprises:

determining a target preset time difference range within which the time difference falls; and
determining a time score corresponding to the target preset time difference range in the first correspondence as the target time score.

4. The method according to any one of the preceding claims, wherein the determining (S304) the target precision score based on the second correspondence and the precision difference comprises:

determining a target preset precision difference range within which the precision difference falls; and
determining a precision score corresponding to the target preset precision difference range in the second correspondence as the target precision score.

5. The method according to any one of the preceding claims, wherein the determining (S305) a decision score based on the time score and the precision score comprises:

obtaining a first product of the target time score and a time weight;
obtaining a second product of the target precision score and a precision weight; and
obtaining the decision score based on the first product and the second product.

6. The method according to any one of the preceding claims, wherein the determining (S306) the current location of the terminal (11) from the first location and the third location based on the decision score and a preset threshold comprises:

if the decision score is greater than or equal to the preset threshold, determining the first location as the current location of the terminal (11); or
if the decision score is less than the preset threshold, determining the third location as the current location of the terminal (11).

7. The method according to any one of the preceding claims, wherein the first location information further comprises a first manner of obtaining the first location through positioning, and the second location information further comprises a second manner of obtaining the third location through positioning; and

the determining the current location of the terminal (11) based on the first time, the second time, the first precision, and the second precision comprises:

determining the current location of the terminal (11) from the first location and the third location based on the first time, the second time, the first precision, the second precision, the first manner, and the second manner; and the determining the current location of the terminal (11) from the first location and the third location based on the first time, the second time, the first precision, the second precision, the first manner, and the second manner comprises:

determining (S406) the current location of the terminal (11) from the first location and the third location based on the decision score, a preset threshold, the first manner, and the second manner.

8. The method according to claim 7, wherein the determining (S406) the current location of the terminal (11) from the first location and the third location based on the decision score, a preset threshold, the first manner, and the second manner comprises:

if the decision score is greater than a first preset threshold, determining the first location as the current location of the terminal (11);

if the decision score is less than a second preset threshold, determining the third location as the current location of the terminal (11);

if the decision score is greater than or equal to the second preset threshold and less than or equal to the first preset threshold, and the first manner is the same as the second manner, determining the first location as the current location of the terminal (11); or

if the decision score is greater than or equal to the second preset threshold and less than or equal to the first preset threshold, and the first manner is different from the second manner, determining the third location as the current location of the terminal (11).

9. A terminal (11), comprising a processor (72) and a memory (71), wherein
the processor (72) is configured to: be coupled to the memory (71), and read and execute instructions in the memory, to implement the method according to any one of claims 1 to 8.

10. A computer storage medium, comprising instructions, wherein when the instructions are run on a communications apparatus, the computer is enabled to perform the method according to any one of claims 1 to 8.

**Patentansprüche**

1. Positionierungsverfahren, das auf ein Endgerät (11) angewendet wird, wobei das Verfahren Folgendes umfasst:

Positionieren (S201) des Endgeräts (11), um erste Standortinformationen zu erlangen, wobei die ersten Standortinformationen einen ersten Standort, der durch die Positionierung erlangt wird, umfassen; und
wenn sich der erste Standort von einem zweiten Standort unterscheidet, der durch eine vorherige Positionierung erlangt worden ist, Bestimmen (S202) eines aktuellen Standorts des Endgeräts (11) auf Grundlage der ersten Standortinformationen und der zweiten Standortinformationen, wobei die zweiten Standortinformationen den Standortinformationen entsprechen, wenn das Endgerät einen dritten Standort durch Positionierung erlangt und der dritte Standort ein Standort ist, der zu dem Endgeräts gehört und der bestimmt wird, bevor das Endgerät den ersten Standort erlangt;
**dadurch gekennzeichnet, dass**
die ersten Standortinformationen ferner einen ersten Erlangungszeitpunkt des ersten Standorts durch Positionierung und eine erste Genauigkeit des ersten Standorts umfassen und die zweiten Standortinformationen ferner einen zweiten Erlangungszeitpunkt des dritten Standorts durch Positionierung und eine zweite Genauigkeit des dritten Standorts umfassen; und
das Bestimmen (S202) eines aktuellen Standorts des Endgeräts (11) auf Grundlage der ersten Standortinformationen und der zweiten Standortinformationen Folgendes umfasst:

Bestimmen des aktuellen Standorts des Endgeräts (11) aus dem ersten Standort und dem dritten Standort auf Grundlage des ersten Zeitpunkts, des zweiten Zeitpunkts, der ersten Genauigkeit und der zweiten Genauigkeit;
wobei das Endgerät (11) eine erste Entsprechung und eine zweite Entsprechung speichert, wobei die erste Entsprechung eine Vielzahl von voreingestellten Zeitpunktunterschiedsbereichen und eine Zeitpunktbewertung entsprechend jedem voreingestellten Zeitpunktunterschiedsbereich umfasst und die zweite Entsprechung eine Vielzahl von voreingestellten Genauigkeitsunterschiedsbereichen und eine Genauigkeitsbewertung entsprechend jedem voreingestellten Genauigkeitsunterschiedsbereich umfasst; und

das Bestimmen des aktuellen Standorts des Endgeräts (11) aus dem ersten Standort und dem dritten Standort auf Grundlage des ersten Zeitpunkts, des zweiten Zeitpunkts, der ersten Genauigkeit und der zweiten Genauigkeit Folgendes umfasst:

Erlangen (S301) eines Zeitunterschieds zwischen dem ersten Zeitpunkt und dem zweiten Zeitpunkt;
Bestimmen (S302) einer Zielzeitpunktbewertung auf Grundlage der ersten Entsprechung und des Zeitpunktunterschieds;
Erlangen (S303) eines Genauigkeitsunterschieds zwischen der ersten Genauigkeit und der zweiten Genauigkeit;
Bestimmen (S304) einer Zielgenauigkeitsbewertung auf Grundlage der zweiten Entsprechung und des Genauigkeitsunterschieds;
Bestimmen (S305) einer Entscheidungsbewertung auf Grundlage der Zielzeitpunktbewertung und der Zielgenauigkeitsbewertung; und
Bestimmen (S306) des aktuellen Standorts des Endgeräts (11) aus dem ersten Standort und dem dritten Standort basierend auf der Entscheidungsbewertung und einem voreingestellten Schwellenwert.

2. Verfahren nach Anspruch 1, wobei, wenn sich der erste Standort von dem zweiten Standort unterscheidet, der durch vorherige Positionierung erlangt wird, und das Endgerät (11) den dritten Standort nicht erlangen kann, das Endgerät den ersten Standort als den aktuellen Standort des Endgeräts bestimmt.

3. Verfahren nach einem der vorhergehenden Ansprüche, wobei das Bestimmen (S302) der Zielzeitpunktbewertung auf Grundlage der ersten Entsprechung und des Zeitunterschieds Folgendes umfasst:

Bestimmen eines voreingestellten Zielzeitpunktunterschiedsbereichs, innerhalb dessen der Zeitunterschied liegt; und
und Bestimmen einer Zeitpunktbewertung, die dem voreingestellten Zielzeitpunktunterschiedsbereich in der ersten Entsprechung entspricht, als die Zielzeitpunktbewertung.

4. Verfahren nach einem der vorhergehenden Ansprüche, wobei das Bestimmen (S304) der Zielgenauigkeitsbewertung auf Grundlage der zweiten Entsprechung und des Genauigkeitsunterschieds Folgendes umfasst:

Bestimmen eines voreingestellten Zielgenauigkeitsunterschiedsbereichs, innerhalb dessen der Genauigkeitsunterschied liegt; und
und Bestimmen einer Genauigkeitsbewertung, die dem voreingestellten Zielgenauigkeitsunterschiedsbereich in der zweiten Entsprechung entspricht, als die Zielgenauigkeitsbewertung.

5. Verfahren nach einem der vorhergehenden Ansprüche, wobei das Bestimmen (S305) einer Entscheidungsbewertung auf Grundlage der Zeitpunktbewertung und der Genauigkeitsbewertung Folgendes umfasst:

Erlangen eines ersten Produkts aus der Zielzeitpunktbewertung und einer Zeitgewichtung;
Erlangen eines zweiten Produkts aus der Zielgenauigkeitsbewertung und einer Genauigkeitsgewichtung; und
Erlangen der Entscheidungsbewertung auf Grundlage des ersten Produkts und des zweiten Produkts.

6. Verfahren nach einem der vorhergehenden Ansprüche, wobei das Bestimmen (S306) des aktuellen Standorts des Endgeräts (11) aus dem ersten Standort und dem dritten Standort auf Grundlage der Entscheidungsbewertung und einem voreingestellten Schwellenwert Folgendes umfasst:

wenn die Entscheidungsbewertung größer als oder gleich dem voreingestellten Schwellenwert ist, Bestimmen des ersten Standorts als den aktuellen Standort des Endgeräts (11); oder
wenn die Entscheidungsbewertung kleiner als der voreingestellte Schwellenwert ist, Bestimmen des dritten Standorts als den aktuellen Standort des Endgeräts (11).

7. Verfahren nach einem der vorhergehenden Ansprüche, wobei die ersten Standortinformationen ferner eine erste Art und Weise zum Erlangen des ersten Standorts durch Positionierung umfassen und die zweiten Standortinformationen ferner eine zweite Art und Weise zum Erlangen des dritten Standorts durch Positionierung umfassen; und das Bestimmen des aktuellen Standorts des Endgeräts (11) auf Grundlage des ersten Zeitpunkts, des zweiten Zeitpunkts, der ersten Genauigkeit und der zweiten Genauigkeit Folgendes umfasst:

Bestimmen des aktuellen Standorts des Endgeräts (11) aus dem ersten Standort und dem dritten Standort auf Grundlage des ersten Zeitpunkts, des zweiten Zeitpunkts, der ersten Genauigkeit, der zweiten Genauigkeit, der ersten Art und Weise und der zweiten Art und Weise; und

das Bestimmen des aktuellen Standorts des Endgeräts (11) aus dem ersten Standort und dem dritten Standort auf Grundlage des ersten Zeitpunkts, des zweiten Zeitpunkts, der ersten Genauigkeit, der zweiten Genauigkeit, der ersten Art und Weise und der zweiten Art und Weise Folgendes umfasst:

Bestimmen (S406) des aktuellen Standorts des Endgeräts (11) aus dem ersten Standort und dem dritten Standort auf Grundlage der Entscheidungsbewertung, eines voreingestellten Schwellenwerts, der ersten Art und Weise und der zweiten Art und Weise.

8. Verfahren nach Anspruch 7, wobei das Bestimmen (S406) des aktuellen Standorts des Endgeräts (11) aus dem ersten Standort und dem dritten Standort auf Grundlage der Entscheidungsbewertung, eines voreingestellten Schwellenwerts, der ersten Art und Weise und der zweiten Art und Weise Folgendes umfasst:

wenn die Entscheidungsbewertung größer als ein erster voreingestellter Schwellenwert ist, Bestimmen des ersten Standorts als den aktuellen Standort des Endgeräts (11);

wenn die Entscheidungsbewertung kleiner als ein zweiter voreingestellter Schwellenwert ist, Bestimmen des dritten Standorts als den aktuellen Standort des Endgeräts (11);

wenn die Entscheidungsbewertung größer als oder gleich dem zweiten voreingestellten Schwellenwert und kleiner als oder gleich dem ersten voreingestellten Schwellenwert ist und die erste Art und Weise die gleiche wie die zweite Art und Weise ist, Bestimmen des ersten Standorts als den aktuellen Standort des Endgeräts (11); oder

wenn die Entscheidungsbewertung größer als oder gleich dem zweiten voreingestellten Schwellenwert und kleiner als oder gleich dem ersten voreingestellten Schwellenwert ist und sich die erste Art und Weise von der zweiten Art und Weise unterscheidet, Bestimmen des dritten Standorts als den aktuellen Standort des Endgeräts (11).

9. Endgerät (11), umfassend einen Prozessor (72) und einen Speicher (71), wobei

der Prozessor (72) zu Folgendem konfiguriert ist: Koppeln mit dem Speicher (71) und Lesen und Ausführen von Anweisungen in dem Speicher, um das Verfahren nach einem der Ansprüche 1 bis 8 umzusetzen.

10. Computerlesbares Speichermedium, umfassend Anweisungen, wobei, wenn die Anweisungen auf einer Kommunikationseinrichtung ausgeführt werden, es dem Computer ermöglicht wird, das Verfahren nach einem der Ansprüche 1 bis 8 durchzuführen.

**Revendications**

1. Procédé de positionnement, appliqué à un terminal (11), dans lequel le procédé comprend :

le positionnement (S201) du terminal (11) pour obtenir des premières informations d'emplacement, dans lequel les premières informations d'emplacement comprennent un premier emplacement obtenu par le biais du positionnement ; et

si le premier emplacement est différent d'un deuxième emplacement obtenu par le biais du positionnement précédent, la détermination (S202) d'un emplacement actuel du terminal (11) sur la base des premières informations d'emplacement et de secondes informations d'emplacement, dans lequel les secondes informations d'emplacement sont des informations d'emplacement correspondantes lorsque le terminal obtient un troisième emplacement par le biais du positionnement, et le troisième emplacement est un emplacement qui est celui du terminal et qui est déterminé avant que le terminal n'obtienne le premier emplacement ;

**caractérisé en ce que**

les premières informations d'emplacement comprennent également un premier temps d'obtention du premier emplacement par le biais du positionnement et une première précision du premier emplacement, et les secondes informations d'emplacement comprennent également un second temps d'obtention du troisième emplacement par le biais du positionnement et une seconde précision du troisième emplacement ; et

la détermination (S202) d'un emplacement actuel du terminal (11) sur la base des premières informations d'emplacement et des secondes informations d'emplacement comprend :

la détermination de l'emplacement actuel du terminal (11) à partir du premier emplacement et du troisième emplacement sur la base du premier temps, du second temps, de la première précision et de la seconde précision ;
dans lequel le terminal (11) stocke une première correspondance et une seconde correspondance, la première correspondance comprend une pluralité de plages de différence de temps prédéfinies et un score de temps correspondant à chaque plage de différence de temps prédéfinie, et la seconde correspondance comprend une pluralité de plages de différence de précision prédéfinies et un score de précision correspondant à chaque plage de différence de précision prédéfinie ; et
la détermination de l'emplacement actuel du terminal (11) à partir du premier emplacement et du troisième emplacement sur la base du premier temps, du second temps, de la première précision et de la seconde précision comprend :

l'obtention (S301) d'une différence de temps entre le premier temps et le second temps ;
la détermination (S302) d'un score de temps cible sur la base de la première correspondance et de la différence de temps ;
l'obtention (S303) d'une différence de précision entre la première précision et la seconde précision ;
la détermination (S304) d'un score de précision cible sur la base de la seconde correspondance et de la différence de précision ;
la détermination (S305) d'un score de décision sur la base du score de temps cible et du score de précision cible ; et
la détermination (S306) de l'emplacement actuel du terminal (11) à partir du premier emplacement et du troisième emplacement sur la base du score de décision et d'un seuil prédéfini.

2. Procédé selon la revendication 1, dans lequel si le premier emplacement est différent du deuxième emplacement obtenu par le biais du positionnement précédent et que le terminal (11) ne peut pas obtenir le troisième emplacement, le terminal détermine le premier emplacement en tant qu'emplacement actuel du terminal.

3. Procédé selon l'une quelconque des revendications précédentes, dans lequel la détermination (S302) du score de temps cible sur la base de la première correspondance et de la différence de temps comprend :

la détermination d'une plage de différence de temps prédéfinie cible dans laquelle se situe la différence de temps ; et
la détermination d'un score de temps correspondant à la plage de différence de temps prédéfinie cible dans la première correspondance en tant que score de temps cible.

4. Procédé selon l'une quelconque des revendications précédentes, dans lequel la détermination (S304) du score de précision cible sur la base de la seconde correspondance et de la différence de précision comprend :

la détermination d'une plage de différence de précision prédéfinie cible dans laquelle se situe la différence de précision ; et
la détermination d'un score de précision correspondant à la plage de différence de précision prédéfinie cible dans la seconde correspondance en tant que score de précision cible.

5. Procédé selon l'une quelconque des revendications précédentes, dans lequel la détermination (S305) d'un score de décision sur la base du score de temps et du score de précision comprend :

l'obtention d'un premier produit du score de temps cible et d'une pondération temporelle ;
l'obtention d'un second produit du score de précision cible et d'un poids de précision ; et
l'obtention du score de décision sur la base du premier produit et du second produit.

6. Procédé selon l'une quelconque des revendications précédentes, dans lequel la détermination (S306) de l'emplacement actuel du terminal (11) à partir du premier emplacement et du troisième emplacement, sur la base du score de décision et d'un seuil prédéfini, comprend :

si le score de décision est supérieur ou égal au seuil prédéfini, la détermination du premier emplacement en tant qu'emplacement actuel du terminal (11) ; ou

si le score de décision est inférieur au seuil prédéfini, la détermination du troisième emplacement en tant qu'emplacement actuel du terminal (11).

7. Procédé selon l'une quelconque des revendications précédentes, dans lequel les premières informations d'emplacement comprennent également une première manière d'obtenir le premier emplacement par le biais du positionnement, et les secondes informations d'emplacement comprennent également une seconde manière d'obtenir le troisième emplacement par le biais du positionnement ; et
la détermination de l'emplacement actuel du terminal (11) sur la base du premier temps, du second temps, de la première précision et de la seconde précision comprend :

la détermination de l'emplacement actuel du terminal (11) à partir du premier emplacement et du troisième emplacement sur la base du premier temps, du second temps, de la première précision, de la seconde précision, de la première manière et de la seconde manière ; et
la détermination de l'emplacement actuel du terminal (11) à partir du premier emplacement et du troisième emplacement sur la base du premier temps, du second temps, de la première précision, de la seconde précision, de la première manière et de la seconde manière comprend :
la détermination (S406) de l'emplacement actuel du terminal (11) à partir du premier emplacement et du troisième emplacement sur la base du score de décision, d'un seuil prédéfini, de la première manière et de la seconde manière.

8. Procédé selon la revendication 7, dans lequel la détermination (S406) de l'emplacement actuel du terminal (11) à partir du premier emplacement et du troisième emplacement sur la base du score de décision, d'un seuil prédéfini, de la première manière et de la seconde manière comprend :

si le score de décision est supérieur à un premier seuil prédéfini, la détermination du premier emplacement en tant qu'emplacement actuel du terminal (11) ;
si le score de décision est inférieur à un second seuil prédéfini, la détermination du troisième emplacement en tant qu'emplacement actuel du terminal (11) ;
si le score de décision est supérieur ou égal au second seuil prédéfini et inférieur ou égal au premier seuil prédéfini, et que la première manière est la même que la seconde manière, la détermination du premier emplacement en tant qu'emplacement actuel du terminal (11) ; ou
si le score de décision est supérieur ou égal au second seuil prédéfini et inférieur ou égal au premier seuil prédéfini, et que la première manière est différente de la seconde manière, la détermination du troisième emplacement en tant qu'emplacement actuel du terminal (11).

9. Terminal (11), comprenant un processeur (72) et une mémoire (71), dans lequel
le processeur (72) est configuré pour : être couplé à la mémoire (71) et lire et exécuter des instructions dans la mémoire, afin de mettre en œuvre le procédé selon l'une quelconque des revendications 1 à 8.

10. Support de stockage informatique, comprenant des instructions, dans lequel, lorsque les instructions sont exécutées sur un appareil de communication, l'ordinateur est activé pour réaliser le procédé selon l'une quelconque des revendications 1 à 8.

FIG. 1

FIG. 2

| | |
|---|---|
| Position a terminal to obtain first location information, where the first location information includes a first location obtained through the positioning | S201 |

| | |
|---|---|
| If the first location is different from a second location obtained through previous positioning, determine a current location of the terminal based on the first location information and second location information, where the second location information is corresponding location information when the terminal obtains a third location through positioning, and the third location is a location that is of the terminal and that is determined before the terminal obtains the first location | S202 |

FIG. 3

Obtain a time difference between a first time of obtaining a first location through positioning and a second time of obtaining a third location through positioning ⟋ S301

Determine a target time score based on a first correspondence and the time difference, where the first correspondence includes a plurality of preset time difference ranges and a time score corresponding to each preset time difference range ⟋ S302

Obtain a precision difference between first precision of the first location and second precision of the third location ⟋ S303

Determine a target precision score based on a second correspondence and the precision difference, where the second correspondence includes a plurality of preset precision difference ranges and a precision score corresponding to each preset precision difference range ⟋ S304

Determine a decision score based on the target time score and the target precision score ⟋ S305

Determine a current location of a terminal from the first location and the third location based on the decision score and a preset threshold ⟋ S306

FIG. 4

Obtain a time difference between a first time of obtaining a first location through positioning and a second time of obtaining a third location through positioning — S401

Determine a target time score based on a first correspondence and the time difference, where the first correspondence includes a plurality of preset time difference ranges and a time score corresponding to each preset time difference range — S402

Obtain a precision difference between first precision of the first location and second precision of the third location — S403

Determine a target precision score based on a second correspondence and the precision difference, where the second correspondence includes a plurality of preset precision difference ranges and a precision score corresponding to each preset precision difference range — S404

Determine a decision score based on the target time score and the target precision score — S405

Determine a current location of a terminal from the first location and the third location based on the decision score, a preset threshold, a first manner, and a second manner — S406

FIG. 5

61                                      62

Positioning module — Determining module

Positioning apparatus

FIG. 6

72                                      72

Processor          ...          Processor

73

71

Memory                        Terminal

FIG. 7

**EP 3 860 159 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2894615 A1